# EUROPEAN PATENT APPLICATION

(11) **EP 4 794 218 A1**
(43) Date of publication of application: **19.08.2026**
(21) Application number: 24881238.0
(22) Date of filing: 26.08.2024
(51) Int. Cl.: H04B 7/06

(54) **RADIO FREQUENCY PROCESSING CIRCUIT, SIGNAL PROCESSING METHOD, AND RADIO FREQUENCY PROCESSING DEVICE**

(30) Priority: 27.10.2023 CN 202311416809
(71) Applicant: HUAWEI TECHNOLOGIES CO., LTD., Shenzhen 518129 (CN)
(72) Inventor: YANG, Bo, Shenzhen, Guangdong 518129 (CN); XIA, Xin, Shenzhen, Guangdong 518129 (CN); LIN, Huajiong, Shenzhen, Guangdong 518129 (CN)
(74) Representative: Gill Jennings & Every LLP
(86) International application number: PCT/CN2024/114622
(87) International publication number: WO 2025/086870

(57) **Abstract**

Embodiments, applied to the field of communication technologies, provide a radio frequency processing circuit, a signal processing method, and a radio frequency processing device. The radio frequency processing circuit includes a radio frequency channel, a plurality of power dividers, and a channel sounding channel. Combining ends of the plurality of power dividers are correspondingly coupled to a plurality of antenna array elements. First splitting ends of the plurality of power dividers are coupled to an input end of the radio frequency channel. Second splitting ends of the plurality of power dividers are coupled to an input end of the channel sounding channel. The plurality of power dividers are configured to: obtain a plurality of corresponding radio frequency signals from the plurality of antenna array elements, and perform splitting processing on the plurality of radio frequency signals to obtain a plurality of first radio frequency data signals and a plurality of radio frequency reference signals. The radio frequency channel is configured to receive the plurality of first radio frequency data signals as input. The channel sounding channel is configured to receive the plurality of radio frequency reference signals as input. The plurality of radio frequency reference signals are used to obtain channel information at a level of the antenna array element. In embodiments, beam round-robin time during full spatial domain coverage can be reduced, and a network system performance loss can be reduced.

## Description

This application claims priority to Chinese Patent Application No. 202311416809.8, filed with the China National Intellectual Property Administration on October 27, 2023 and entitled "RADIO FREQUENCY PROCESSING CIRCUIT, SIGNAL PROCESSING METHOD, AND RADIO FREQUENCY PROCESSING DEVICE", which is incorporated herein by reference in its entirety.

### TECHNICAL FIELD

This application relates to the field of communication technologies, and in particular, to a radio frequency processing circuit, a signal processing method, and a radio frequency processing device.

### BACKGROUND

With the development of communication technologies, an operating frequency of a communication device gradually increases, resulting in an increase in a space propagation loss of an electromagnetic wave. Therefore, a macro base station side needs to have a higher equivalent isotropic radiated power (equivalent isotropic radiated power, EIRP) to compensate for a path loss. Currently, a related technology of a hybrid beamforming (hybrid beamforming, HBF) architecture is mainly used to increase the EIRP by increasing an antenna gain. However, increasing the antenna gain by using the HBF architecture requires a single radio frequency channel to drive more antenna array elements, resulting in a smaller beamwidth. In a case of a smaller beamwidth, more beams are required to perform time-round robin to implement full spatial domain coverage, and a network system performance loss is further increased.

Therefore, how to reduce beam round-robin time during full spatial domain coverage and reduce a network system performance loss becomes a technical problem to be urgently resolved.

### SUMMARY

Embodiments of this application provide a radio frequency processing circuit, a signal processing method, and a radio frequency processing device, to reduce beam round-robin time during full spatial domain coverage, and reduce a network system performance loss.

To achieve the foregoing objectives, the following technical solutions are used in embodiments of this application.

According to a first aspect, a radio frequency processing circuit is provided. The radio frequency processing circuit includes a radio frequency channel, a plurality of power dividers, and a channel sounding channel. Combining ends of the plurality of power dividers are correspondingly coupled to a plurality of antenna array elements; first splitting ends of the plurality of power dividers are coupled to an input end of the radio frequency channel; and second splitting ends of the plurality of power dividers are coupled to an input end of the channel sounding channel. The plurality of power dividers are configured to: obtain a plurality of corresponding radio frequency signals from the plurality of antenna array elements, and perform splitting processing on the plurality of radio frequency signals to obtain a plurality of first radio frequency data signals and a plurality of radio frequency reference signals. The radio frequency channel is configured to receive the plurality of first radio frequency data signals as input. The channel sounding channel is configured to receive the plurality of radio frequency reference signals as input, where the plurality of radio frequency reference signals are used to obtain channel information at a level of the antenna array element.

In this embodiment of this application, one radio frequency channel is mapped to a plurality of antenna array elements, so that a quantity of radio frequency channels is decoupled from a quantity of antenna array elements, in other words, a quantity of radio frequency channels required by a same quantity of antenna array elements is reduced, and a convergence ratio between the quantity of radio frequency channels and the quantity of antenna array elements is increased. In this way, more antenna array elements are accommodated on a same physical aperture plane, thereby increasing an antenna gain and enhancing coverage. However, in this implementation, a single radio frequency channel drives more antenna array elements, resulting in a smaller beamwidth. In a case of a smaller beamwidth, more beams are required to perform time-round robin to implement full spatial domain coverage, and a network system performance loss is further increased. Therefore, a power divider and the dedicated channel sounding channel may be disposed in the radio frequency processing circuit. The power divider obtains a corresponding radio frequency signal from an antenna array element, and performs splitting processing on the radio frequency signal to obtain a first radio frequency data signal and a radio frequency reference signal that are at a level of the antenna array element. The radio frequency reference signal at the level of the antenna array element is input to the dedicated channel sounding channel. A single antenna array element has a large beamwidth, and channel information can be received in entire spatial domain. Therefore, channel information at a level of the antenna array element or full-spatial-domain channel information can be obtained through one or few times of beam-round robin by using the channel information at a level of the antenna array element input to the channel sounding channel, so that beam round-robin time during full spatial domain coverage is reduced, a channel measurement period is shortened, time overheads are reduced, the network system performance loss is reduced, and channel aging is delayed, thereby improving data transmission performance. It can be learned from analysis that the radio frequency processing circuit provided in the solutions of this application reduces the beam round-robin time during full spatial domain coverage and reduces the network system performance loss while increasing the antenna gain.

In a possible implementation, the radio frequency processing circuit further includes a gating circuit. The second splitting ends of the plurality of power dividers are coupled to a splitting end of the gating circuit. A common end of the gating circuit is coupled to the input end of the channel sounding channel. In this embodiment, different channel information at a level of the antenna array element may be dynamically obtained through cooperation between the channel sounding channel and the gating circuit.

In a possible implementation, the gating circuit is a single-pole multi-throw switch.

In a possible implementation, the radio frequency processing circuit further includes a plurality of low noise amplifiers. Input ends of the plurality of low noise amplifiers are correspondingly coupled to the plurality of antenna array elements, and output ends of the plurality of low noise amplifiers are coupled to the combining ends of the plurality of power dividers. A power divider is disposed at an output end of a low noise amplifier, and is configured to receive a signal processed by the low noise amplifier, to reduce impact of noise introduced by an antenna array element side on a radio frequency reference signal, thereby improving quality of the signal received on a power divider side.

In a possible implementation, the radio frequency processing circuit further includes a power amplifier. The channel sounding channel is a power amplifier predistortion feedback channel corresponding to the power amplifier. In this embodiment, the channel sounding channel is shared with the power amplifier predistortion feedback channel, so that hardware consumption of a radio frequency circuit is reduced, and hardware costs are reduced.

According to a second aspect, an embodiment of this application further provides a signal processing method, applied to a radio frequency processing circuit. The radio frequency processing circuit includes a radio frequency channel, a plurality of power dividers, and a channel sounding channel. The method includes: The plurality of power dividers obtain a plurality of corresponding radio frequency signals from a plurality of antenna array elements, and perform splitting processing on the plurality of radio frequency signals to obtain a plurality of first radio frequency data signals and a plurality of radio frequency reference signals. The plurality of first radio frequency data signals are input to the radio frequency channel. The plurality of radio frequency reference signals are input to the channel sounding channel, where the plurality of radio frequency reference signals are used to obtain channel information at a level of the antenna array element.

In a possible implementation, the inputting the plurality of radio frequency reference signals includes: inputting a control signal, where the control signal indicates to select one or more of the plurality of radio frequency reference signals; and inputting the one or more of the plurality of radio frequency reference signals in response to the control signal.

In a possible implementation, the radio frequency processing circuit further includes a power amplifier. The channel sounding channel is a power amplifier predistortion feedback channel corresponding to the power amplifier. The method further includes: The radio frequency channel transmits a second radio frequency data signal through the antenna array element in a first slot. The inputting the one or more of the plurality of radio frequency reference signals further includes: inputting the one or more of the plurality of radio frequency reference signals to the channel sounding channel in a second slot. The first slot and the second slot are slots that are spaced.

According to a third aspect, an embodiment of this application further provides a radio frequency processing device, including a circuit board and any radio frequency processing circuit according to the first aspect, where the radio frequency processing circuit is disposed on the circuit board.

According to a fourth aspect, an embodiment of this application further provides a communication system, including a baseband processing device and the radio frequency processing device according to the third aspect. The baseband processing device is coupled to the radio frequency processing device. The radio frequency processing device is configured to output a plurality of radio frequency reference signals to the baseband processing device, where the plurality of radio frequency reference signals are used to obtain channel information at a level of the antenna array element.

In a possible implementation, the baseband processing device is configured to obtain channel information at a level of the antenna array element of the radio frequency processing circuit based on the radio frequency reference signal.

In a possible implementation, the radio frequency processing device includes a controller, where the controller is configured to obtain channel information at a level of the antenna array element of the radio frequency processing circuit based on the radio frequency reference signal.

For technical principles and beneficial effects of the second aspect, the third aspect, and the fourth aspect, refer to related descriptions of the first aspect. Details are not described herein again.

### BRIEF DESCRIPTION OF DRAWINGS

FIG. 1 is a diagram of a structure of a communication system according to an embodiment of this application;
FIG. 2 is a diagram of a structure of a radio frequency processing device according to an embodiment of this application;
FIG. 3 is a diagram of a structure of composition of an equivalent isotropic radiated power according to an embodiment of this application;
FIG. 4 is a diagram of comparison between a quantity of antenna array elements and an antenna gain according to an embodiment of this application;
FIG. 5 is a diagram 1 of a structure of a radio frequency processing circuit according to an embodiment of this application;
FIG. 6 is a diagram of a structure of an active antenna unit according to an embodiment of this application;
FIG. 7 is a diagram 2 of a structure of a radio frequency processing circuit according to an embodiment of this application;
FIG. 8 is a diagram of a simulation relationship between a quantity of antenna array elements and a beamwidth according to an embodiment of this application;
FIG. 9a and FIG. 9b are diagrams of a relationship between a quantity of antenna array elements and a beamwidth according to an embodiment of this application;
FIG. 10 is a diagram of obtaining full-spatial-domain channel information by performing beam sweeping in a radio frequency processing circuit according to an embodiment of this application;
FIG. 11 is a diagram 3 of a structure of a radio frequency processing circuit according to an embodiment of this application;
FIG. 12 is a diagram 4 of a structure of a radio frequency processing circuit according to an embodiment of this application;
FIG. 13 is a diagram 5 of a structure of a radio frequency processing circuit according to an embodiment of this application;
FIG. 14 is a diagram 6 of a structure of a radio frequency processing circuit according to an embodiment of this application;
FIG. 15 is a diagram 7 of a structure of a radio frequency processing circuit according to an embodiment of this application;
FIG. 16 is a diagram 8 of a structure of a radio frequency processing circuit according to an embodiment of this application;
FIG. 17 is a diagram of a structure of another radio frequency processing device according to an embodiment of this application; and
FIG. 18 is a flowchart of a signal processing method according to an embodiment of this application.

### DESCRIPTION OF EMBODIMENTS

It should be noted that terms such as "first" and "second" in embodiments of this application are merely used to distinguish between features of a same type, and cannot be understood as an indication of relative importance, a quantity, a sequence, or the like.

The term such as "example" or "for example" in embodiments of this application is used to represent giving an example, an illustration, or a description. Any embodiment or design scheme described as an "example" or "for example" in this application should not be explained as being more preferred or having more advantages than another embodiment or design scheme. To be precise, use of the terms such as "example" or "for example" is intended to present a relative concept in a specific manner.

The terms "coupling" and "connection" in embodiments of this application should be understood in a broad sense. For example, the terms may be a physical direct connection, or may be an indirect connection implemented through an electronic component, for example, a connection implemented through a resistor, an inductor, a capacitor, or another electronic component.

First, some basic concepts involved in this application are explained and described.

An equivalent isotropic radiated power (equivalent isotropic radiated power, EIRP) is also referred to as an effective isotropic radiated power, and represents a product of an antenna gain of a transmit antenna relative to an isotropic radiating element in a given direction and a net power received by the antenna from a connected transmitter. A power radiated by a transmit antenna of a satellite or an earth station in a beam center axis direction is referred to as an effective isotropic radiated power of a sending device, to be specific, a product of a power provided by a radio transmitter for the antenna and an absolute gain of the antenna in a given direction. The power is an important indicator of a transmit capability of the earth station or a transponder. An ideal isotropic antenna with same unit gains in all directions is usually used as a reference antenna in a wireless communication system. The EIRP is defined as follows: EIRP = Pt * Gt, where Pt represents the net power received from the connected transmitter, and Gt represents the antenna gain of the transmit antenna. The EIRP represents a transmit power that can be obtained by the transmitter in a direction with a maximum antenna gain compared with an isotropic antenna.

An antenna gain is a ratio between power density of signals that are generated by an actual antenna and an ideal radiating element at a same point in space when input powers are equal. The antenna gain quantitatively describes a degree to which an antenna intensively radiates an input power. It is clear that the gain is closely related to an antenna pattern. A narrower main lobe of the pattern indicates a smaller side lobe and a higher gain. The antenna gain is used to measure a capability of sending and receiving a signal by an antenna to and from a specific direction. The antenna gain is one of most important parameters for selecting a base station antenna. Generally, an increase in the gain mainly depends on reducing a width of a lobe for directional radiation on a vertical plane and maintaining isotropic radiation performance on a horizontal plane. The antenna gain is extremely important to running quality of a communication system because the antenna gain determines a signal level at a cell edge. Increasing the gain can increase coverage of a network in a determined direction, or increase a gain margin in a determined range. Any cellular system is a two-way process. Increasing the antenna gain can also reduce a gain budget margin of the two-way system. Under a same condition, a higher gain indicates a larger propagation distance of an electromagnetic wave.

A beam is a shape formed on the surface of the earth by electromagnetic waves transmitted by antennas. The beam may also be understood as a main lobe of a radiation pattern of an antenna array.

A beamwidth refers to an angular domain width formed when power density on two sides of a maximum radiation direction drops to a half compared with power density in the maximum radiation direction, and is also referred to as a 3 dB beamwidth. A half-power beamwidth on a horizontal plane is referred to as a horizontal beamwidth, and a half-power beamwidth on a vertical plane is referred to as a vertical beamwidth.

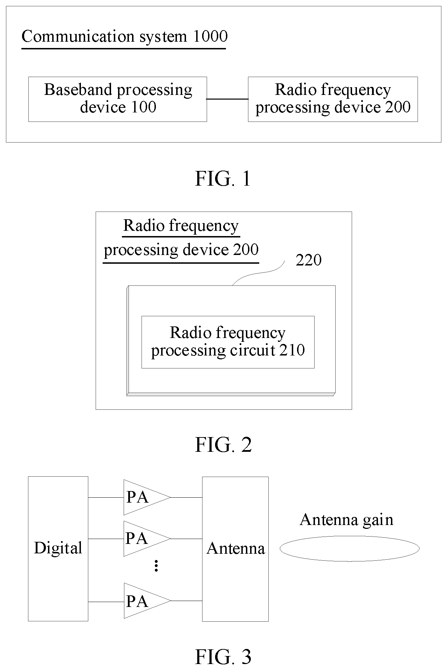

An embodiment of this application provides a communication system 1000, as shown in FIG. 1, including a baseband processing device 100 and a radio frequency processing device 200. The baseband processing device 100 is coupled to the radio frequency processing device 200. The radio frequency processing device 200 is configured to output a plurality of radio frequency reference signals to the baseband processing device 100, where the plurality of radio frequency reference signals are used to obtain channel information at a level of the antenna array element. The channel information at a level of the antenna array element may include, but is not limited to, information such as a phase, an amplitude, and a delay of a signal.

In some possible implementations, as shown in FIG. 2, the radio frequency processing device 200 includes a radio frequency processing circuit 210 and a circuit board 220, and the radio frequency processing circuit 210 is disposed on the circuit board 220.

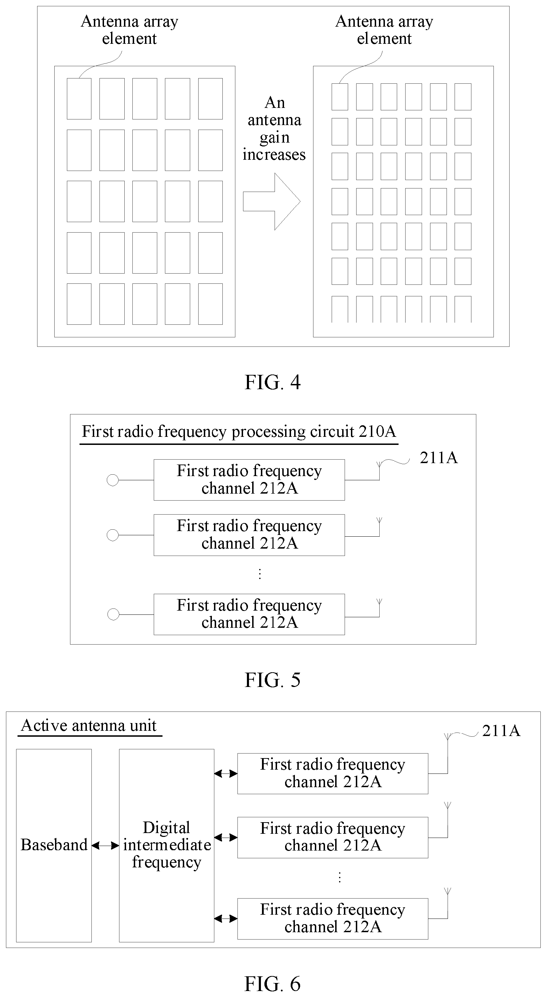

For example, as 5G communication evolves to 5.5G or 6G communication, an operating carrier frequency gradually evolves from a frequency lower than 6 GHz (sub-6 GHz) in 5G communication to a frequency higher than 6 GHz (up-6 GHz). As the operating frequency increases, a space propagation loss of an electromagnetic wave increases. Therefore, a macro base station side needs to have a higher EIRP to compensate for a path loss. Currently, there are mainly two technical means for increasing the EIRP: One is to increase a transmit power of a power amplifier 18 (power amplifier, PA), and the other one is to increase an antenna gain. As shown in FIG. 3, the transmit power of the PA and the antenna gain jointly form the EIRP. However, because increasing the transmit power of the PA increases power consumption of the radio frequency processing circuit 210, increasing the transmit power of the PA is greatly restricted. Therefore, in evolution to the higher frequency up-6 GHz, the EIRP is increased by increasing the antenna gain. The antenna gain is increased mainly by increasing a quantity of antenna array elements. One antenna may include a plurality of antenna array elements. As shown in FIG. 4, because a wavelength of an electromagnetic wave at a frequency up-6 GHz is smaller than a wavelength of an electromagnetic wave at a frequency sub-6 GHz, a size of an antenna array element corresponding to the frequency up-6 GHz may be reduced. Therefore, on a same physical aperture plane, more antenna array elements can be accommodated, and a higher antenna gain can be achieved.

To increase the EIRP, in some possible implementations, the radio frequency processing circuit 210 may be a first radio frequency processing circuit based on a digital beamforming (digital beamforming, DBF) architecture. As shown in FIG. 5, the first radio frequency processing circuit 210A includes a plurality of first antenna array elements 211A and a plurality of first radio frequency channels 212A. The first radio frequency channels 212A are in one-to-one mapping relationship with the first antenna array elements 211A. The first radio frequency channel 212A completes functions such as filtering and amplifying a radio frequency analog signal, and the first antenna array element 211A mainly completes sending and receiving an analog signal.

The first radio frequency processing circuit 210A may increase the EIRP by increasing a quantity of first antenna array elements 211A. However, as the quantity of first antenna array elements 211A increases, a quantity of first radio frequency channels 212A that match the first antenna array elements 211A at a back end also increases, which greatly increases device disposition costs. As shown in FIG. 5, a main advantage of the first radio frequency processing circuit 210A lies in that the first radio frequency channels 212A are in one-to-one mapping relationship with the first antenna array elements 211A. Because a single first antenna array element 211A has a large beamwidth, a controller in a baseband processing circuit or a radio frequency circuit may obtain full-spatial-domain channel information at a time without performing beam sweeping a plurality of times. Therefore, network performance is optimal. However, based on the mapping relationship between the first antenna array elements 211A and the first radio frequency channels 212A, it can be learned that a larger quantity of first antenna array elements 211A indicates a larger quantity of corresponding first radio frequency channels 212A. Because the quantity of first radio frequency channels 212A increases, hardware costs and power consumption of the first radio frequency processing circuit 210A increase. If the first radio frequency processing circuit 210A is still used when a frequency evolves to a frequency up-6 GHz, as an operating frequency evolves to a higher frequency, the quantity of first antenna array elements 211A increases sharply in a case of a same physical aperture, and a quantity of hardware devices such as the first radio frequency channels 212A that match the first antenna array elements 211A also increases proportionally, resulting in a sharp increase in power consumption and hardware costs of the first radio frequency processing circuit 210A.

In an example, the first radio frequency processing circuit 210A may be further configured to: modulate a baseband signal to obtain an intermediate frequency signal, and perform up-conversion on the intermediate frequency signal to obtain a radio frequency signal; or directly modulate a baseband signal to a radio frequency signal.

In an example, the first radio frequency processing circuit 210A may be an active antenna unit (active antenna unit, AAU), or a remote radio unit (remote radio unit, RRU). As shown in FIG. 6, the AAU includes a baseband, a digital intermediate frequency, the first radio frequency channel 212A, the first antenna array element 211A, and the like. The baseband mainly completes functions such as baseband signal encoding, modulation, layer mapping, and channel weighting. The digital intermediate frequency mainly completes time domain processing functions such as frequency conversion and filtering.

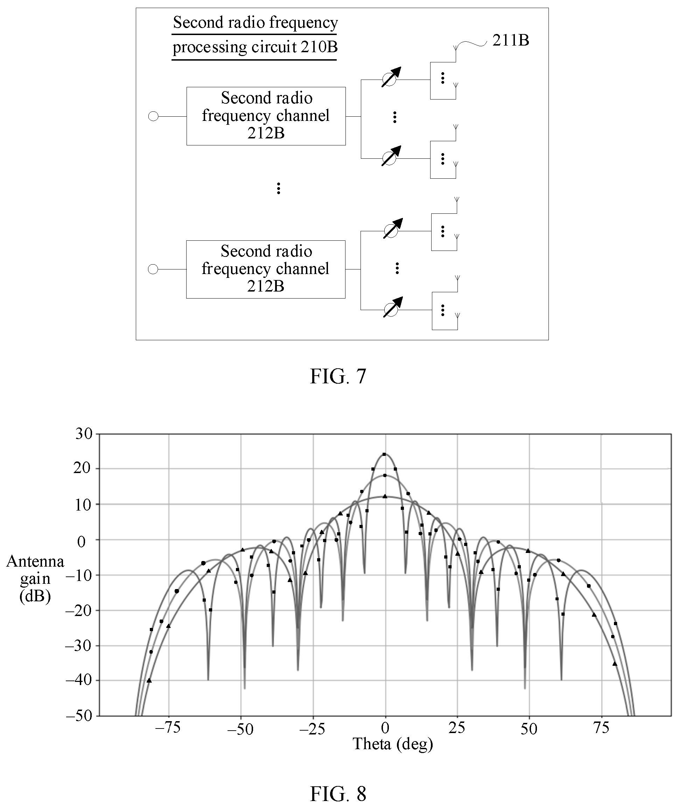

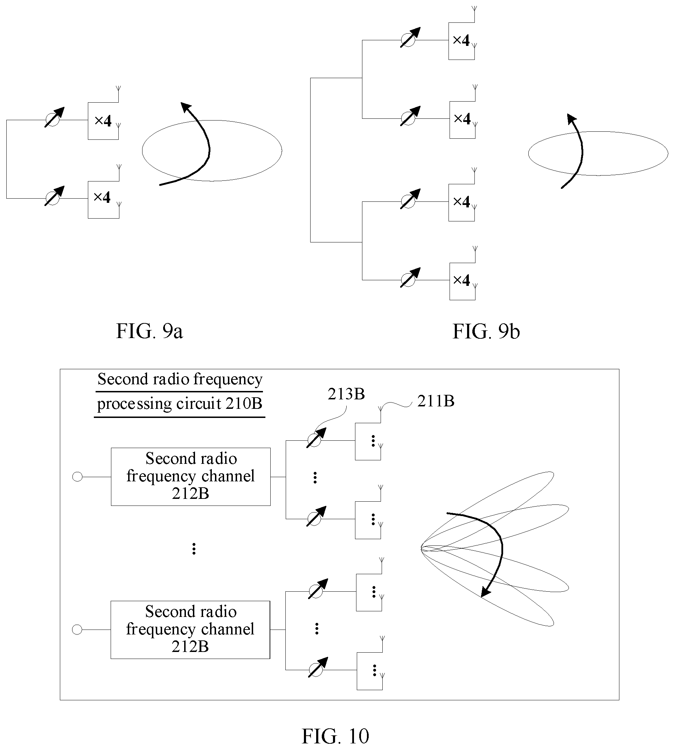

To resolve the problems existing in the first radio frequency processing circuit 210A, in some possible implementations, the radio frequency processing circuit 210 may be a second radio frequency processing circuit based on a hybrid beamforming (hybrid beamforming, HBF) architecture. As shown in FIG. 7, the second radio frequency processing circuit 210B includes a plurality of second antenna array elements 211B and a plurality of second radio frequency channels 212B, and one second radio frequency channel 212B is coupled to a plurality of second antenna array elements 211B. In the second radio frequency processing circuit 210B, one second radio frequency channel 212B may be coupled to a plurality of second antenna array elements 211B. When a quantity of second antenna array elements 211B is fixed, compared with the first radio frequency processing circuit 210A, a quantity of required second radio frequency channels 212B is reduced in the second radio frequency processing circuit 210B. Therefore, a main advantage of the second radio frequency processing circuit 210B lies in that the quantity of second radio frequency channels 212B is decoupled from the quantity of second antenna array elements 211B, in other words, a same quantity of second antenna array elements 211B requires a smaller quantity of second radio frequency channels 212B, thereby reducing power consumption and hardware costs of the second radio frequency processing circuit 210B. However, because a single second radio frequency channel 212B drives more second antenna array elements 211B, that is, one channel is mapped to more second antenna array elements 211B, a beam of the second antenna array element 211B of the single channel becomes narrower, as shown in FIG. 8. FIG. 8 shows a simulation relationship between a quantity of second antenna array elements 211B coupled to one second radio frequency channel 212B, theta (theta), and an antenna gain (ant-gain). In FIG. 8, a line of with triangular markers distributed represents that one second radio frequency channel 212B is coupled to four second antenna array elements 211B; a line with circular markers distributed represents that one second radio frequency channel 212B is coupled to eight second antenna array elements 211B; and a line with square markers distributed represents that one second radio frequency channel 212B is coupled to 16 second antenna array elements 211B. For example, FIG. 9a and FIG. 9b show relationships between different quantities of second antenna array elements 211B and a beamwidth. FIG. 9a shows that one second radio frequency channel 212B is mapped to eight second antenna array elements 211B, which are eight vertical elements, a gain is 13 dBi, a horizontal beamwidth is 100°, and a vertical beamwidth is 13°. FIG. 9b shows that one second radio frequency channel 212B is mapped to 16 second antenna array elements 211B, which are 16 vertical elements, a gain is 16 dBi, a horizontal beamwidth is 100°, and a vertical beamwidth is 6°.

In an example, to implement full domain coverage, as shown in FIG. 10, a phase shifter 213B may be disposed between the second radio frequency channel 212B and the second antenna array element 211B. A main function is to configure different weights through the phase shifter 213B, to adjust a weighted value or a phase value of the phase shifter 213B, so that beams point to different directions, the second antenna array element 211B is controlled to perform beam sweeping, and the beams sweep an entire spatial domain in a time division manner. It can be learned that, when a beamwidth of the second antenna array element 211B becomes small, more beams are required to perform time-round robin for full spatial domain coverage. In this case, a channel measurement period is prolonged, a channel is severely aged, network performance is degraded, and a corresponding data transmission performance loss is large. Consequently, a network system performance loss is increased.

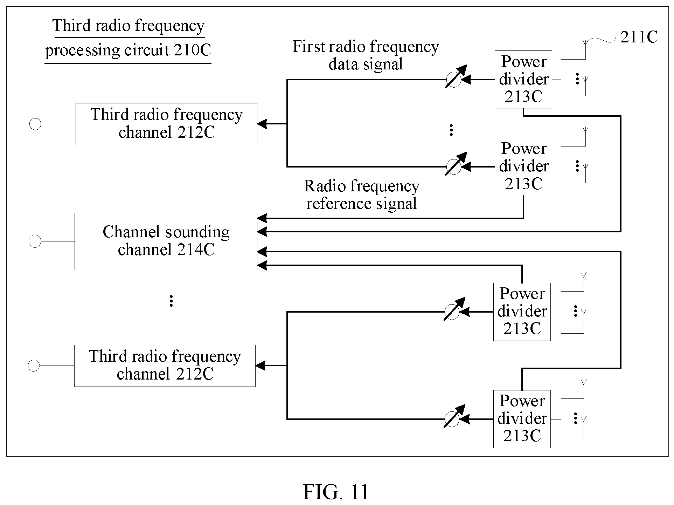

To reduce beam round-robin time during full spatial domain coverage and reduce the network system performance loss, in some possible implementations, the radio frequency processing circuit 210 may be a third radio frequency processing circuit based on an HBF architecture. As shown in FIG. 11, the third radio frequency processing circuit 210C includes a third radio frequency channel 212C, a plurality of power dividers 213C, and a channel sounding channel 214C. Combining ends of the plurality of power dividers 213C are correspondingly coupled to a plurality of third antenna array elements 211C. First splitting ends of the plurality of power dividers 213C are coupled to an input end of the third radio frequency channel 212C. Second splitting ends of the plurality of power dividers 213C are coupled to an input end of the channel sounding channel 214C. The plurality of power dividers 213C are configured to: obtain a plurality of corresponding radio frequency signals from the plurality of third antenna array elements 211C, and perform splitting processing on the plurality of radio frequency signals to obtain a plurality of first radio frequency data signals and a plurality of radio frequency reference signals. The third radio frequency channel 212C is configured to receive the plurality of first radio frequency data signals as input. The channel sounding channel 214C is configured to receive the plurality of radio frequency reference signals as input, where the plurality of radio frequency reference signals are used to obtain channel information at a level of the antenna array element.

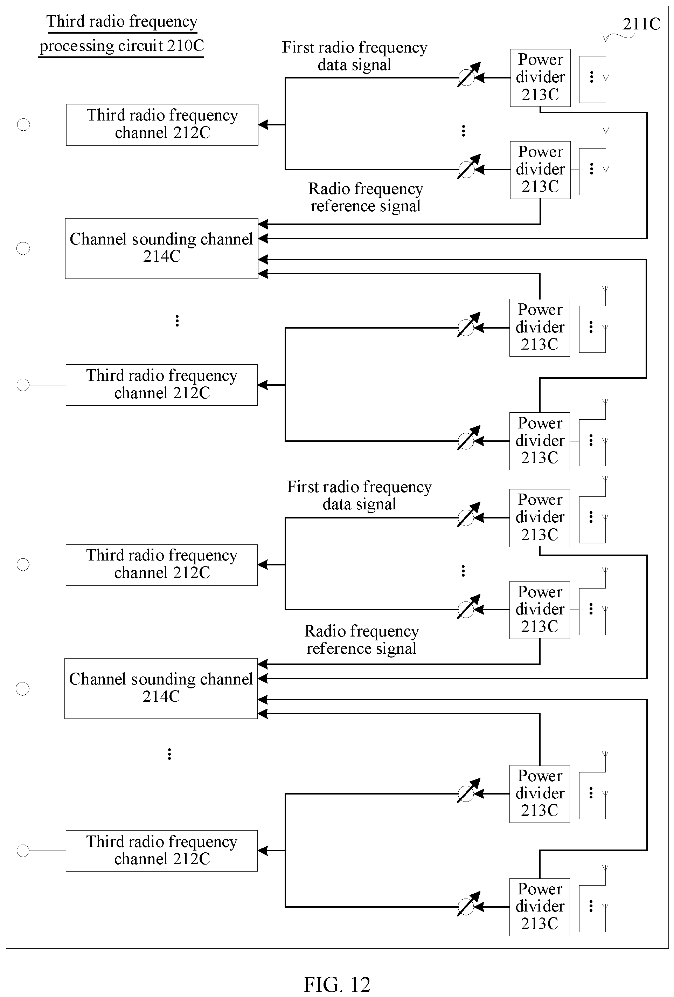

For example, as shown in FIG. 12, the third radio frequency processing circuit 210C may include a plurality of channel sounding channels 214C, and one channel sounding channel 214C may correspond to a plurality of third antenna array elements 211C. The first radio frequency data signal and the radio frequency reference signal may be a same signal.

For example, the third radio frequency processing circuit 210C provided in this embodiment may be used in, but is not limited to, devices such as a base station, a mobile communication terminal, and a radar.

In this embodiment of this application, one third radio frequency channel 212C is mapped to a plurality of third antenna array elements 211C, so that a quantity of third radio frequency channels 212C is decoupled from a quantity of third antenna array elements 211C, in other words, a quantity of third radio frequency channels 212C required by a same third antenna array element 211C is reduced, and a convergence ratio between the third radio frequency channels 212C and the third antenna array elements 211C is increased. In this way, more third antenna array elements 211C are accommodated on a same physical aperture plane, thereby increasing an antenna gain and enhancing coverage. However, in this implementation, a single third radio frequency channel 212C drives more third antenna array elements 211C, resulting in a smaller beamwidth. In a case of a smaller beamwidth, more beams are required to perform time-round robin to implement full spatial domain coverage, and a network system performance loss is further increased. Therefore, a power divider 213C and the dedicated channel sounding channel 214C may be disposed in the third radio frequency processing circuit 210C. The power divider 213C obtains a corresponding radio frequency signal from a third antenna array element 211C, and performs splitting processing on the radio frequency signal to obtain a first radio frequency data signal and a radio frequency reference signal that are at a level of the third antenna array element 211C. The radio frequency reference signal at the level of the third antenna array element 211C is input to the dedicated channel sounding channel 214C. A single third antenna array element 211C has a large beamwidth, and channel information can be received in entire spatial domain. Therefore, channel information at a level of the antenna array element or full-spatial-domain channel information can be obtained through one or few times of beam-round robin by using the channel information at the level of the third antenna array element 211C input to the channel sounding channel 214C, so that beam round-robin time during full spatial domain coverage is reduced, a channel measurement period is shortened, time overheads are reduced, the network system performance loss is reduced, and channel aging is delayed, thereby improving data transmission performance. It can be learned from analysis that the third radio frequency processing circuit 210C provided in the solutions of this application reduces the beam round-robin time during full spatial domain coverage and reduces the network system performance loss while increasing the antenna gain.

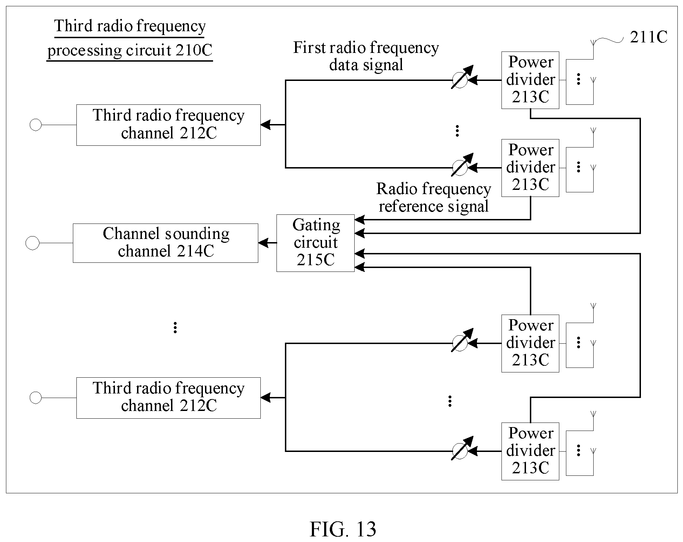

In some possible implementations, as shown in FIG. 13, the third radio frequency processing circuit 210C further includes a gating circuit 215C. The second splitting ends of the plurality of power dividers 213C are coupled to a splitting end of the gating circuit 215C; and a common end of the gating circuit 215C is coupled to the input end of the channel sounding channel 214C.

For example, the gating circuit 215C selects a third antenna array element 211C according to a preset rule. In this embodiment, the preset rule may be that a third antenna array element 211C corresponding to a higher-power signal is selected based on a value of received signal power strength of the third antenna array element 211C.

In some possible implementations, the gating circuit 215C may be a single-pole multi-throw switch.

In some possible implementations, the third radio frequency processing circuit 210C further includes a plurality of low noise amplifiers 216C. Input ends of the plurality of low noise amplifiers 216C are correspondingly coupled to the plurality of third antenna array elements 211C, and output ends of the plurality of low noise amplifiers 216C are coupled to the combining ends of the plurality of power dividers 213C.

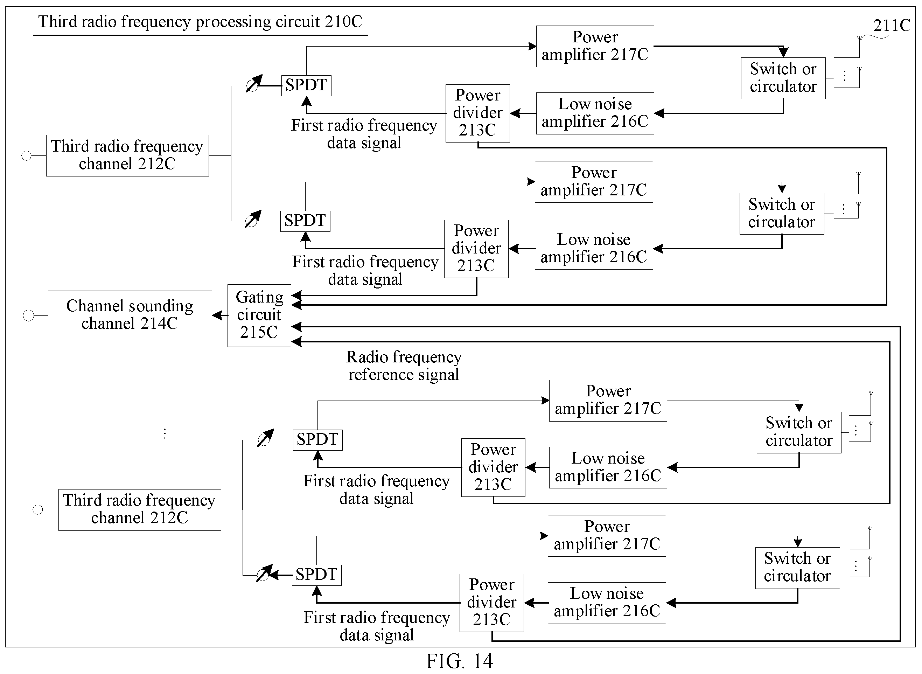

In an example, FIG. 14 shows a third radio frequency processing circuit 210C for joint phase shifting for sending and receiving, which includes a single-pole double-throw (single-pole double-throw, SPDT) switch, a switch, or a circulator. The single-pole double-throw switch is configured to switch an operating slot, for example, a downlink operating slot or an uplink operating slot.

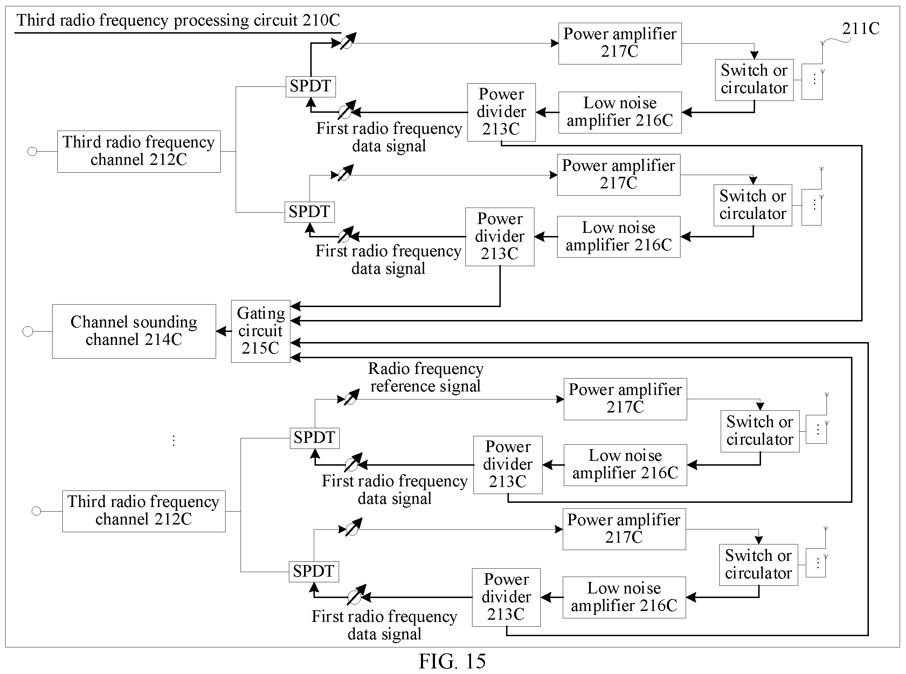

In an example, FIG. 15 shows a third radio frequency processing circuit 210C for independent phase shifting for sending and receiving, which includes an SPDT, a switch, or a circulator.

In this embodiment of this application, a power divider is disposed at an output end of a low noise amplifier, and is configured to receive a signal processed by the low noise amplifier, to reduce impact of noise introduced by an antenna array element side on a radio frequency reference signal, thereby improving quality of the signal received on a power divider side.

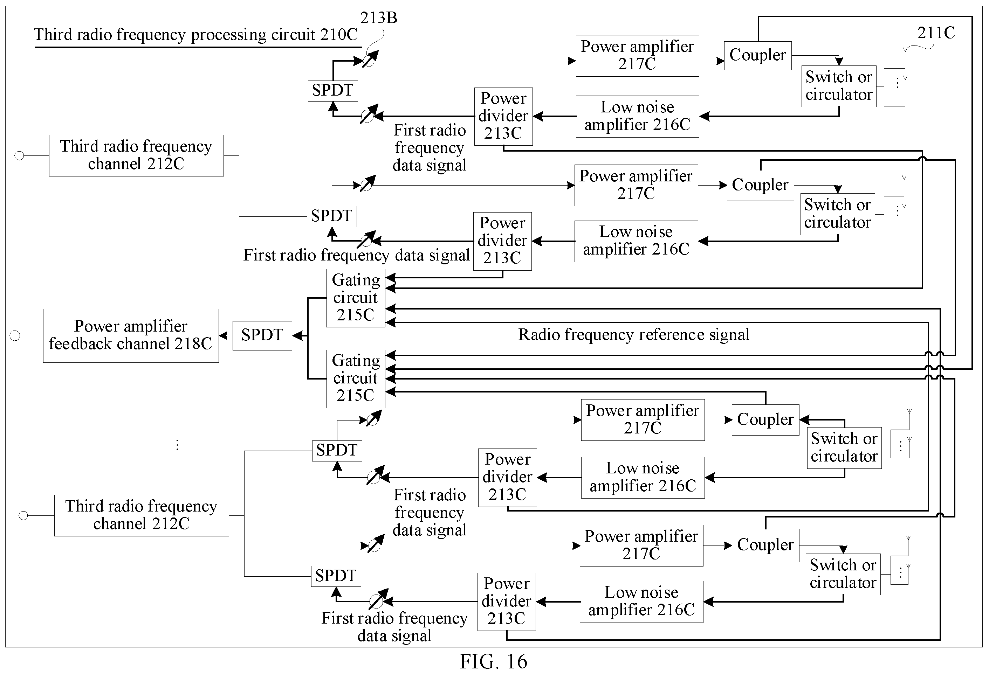

In some possible implementations, as shown in FIG. 16, the third radio frequency processing circuit 210C further includes a power amplifier 217C. The channel sounding channel 214C is a power amplifier feedback channel 218C corresponding to the power amplifier 217C.

For example, as shown in FIG. 16, when a radio frequency signal is output from a third radio frequency channel 212C, the radio frequency signal needs to be amplified by the power amplifier 217C before being transmitted through a third antenna array element 211C. In an ideal case, the power amplifier 217C receives an input signal and outputs a higher-power signal that is proportional to the input signal, to convert most of direct current powers provided for the amplifier into signal output powers. However, this is not an ideal case, and the power amplifier 217C is made of a power tube. The power tube is an active device, and shows a linear characteristic only in a specific operating range. When the power amplifier 217C based on the power tube operates in a linear operating range, an output power and an input power of the power amplifier 217C form a specific amplification gain. When the power amplifier 217C operates at a saturation point of the linear operating range, maximum operating efficiency can be achieved. However, with the development of wireless communication technologies, a modulation order of a radio frequency signal becomes more complex, and therefore, the radio frequency signal has a higher signal peak-to-average ratio. In a case in which the signal peak-to-average ratio increases, if the power amplifier 217C operates at a high power point in the linear operating range (or even a saturation power point in the linear operating range), a radio frequency signal input by the power amplifier 217C easily enters a non-linear operating range or even a saturation operating range of the power amplifier 217C, resulting in large non-linear distortion of a radio frequency signal output by the power amplifier 217C, and affecting communication. To avoid such non-linear distortion, specific power back-off is usually performed, so that the power amplifier 217C operates at a power point backed off by a specific amount from the saturation power point in the linear operating range. However, a disadvantage of such power back-off is that the operating efficiency of the power amplifier 217C is greatly reduced, and most powers provided by a power supply of the power amplifier 217C are lost in a form of heat. Therefore, to reduce a power loss, an improvement manner is that the power amplifier 217C is designed with a power combination architecture, and a power amplification circuit of a Doherty (Doherty) architecture or another power combination architecture is used to optimize a back-off amount and improve operating efficiency of the power amplifier 217C. In another manner, a predistortion amplification circuit is disposed in the power amplifier 217C, and a non-linear distortion feature opposite to a non-linear distortion feature of the power amplifier 217C is pre-assigned, by using the predistortion amplification circuit, to a radio frequency signal input by the power amplifier 217C, to compensate for the non-linear distortion of the power amplifier 217C operating in the power saturation range. The predistortion amplification circuit may be a digital predistortion amplification circuit and an analog predistortion amplification circuit. In a process of compensating for the non-linear distortion by using the predistortion amplification circuit, an output radio frequency signal needs to be obtained in a splitting manner from an output end of the power amplifier 217C in real time. Feedback is performed based on the radio frequency signal output by the power amplifier 217C, and the non-linear distortion characteristic of the predistortion amplification circuit is dynamically adjusted by using the fed back radio frequency signal, to ensure a good non-linear compensation effect for the power amplifier 217C. In this feedback process, a corresponding predistortion feedback (feedback, FB) channel needs to be set for the power amplifier 217C, to sample the radio frequency signal output by the power amplifier 217C. The power amplifier feedback channel 218C in this embodiment may be a predistortion feedback channel of the power amplifier 217C. The third radio frequency processing circuit 210C is an HBF architecture of reusing an FB channel, to be specific, an original FB channel of the third radio frequency processing circuit 210C is shared as a channel sounding channel 214C, so that the channel sounding channel 214C is shared with the original FB channel of the third radio frequency processing circuit 210C, to reduce hardware consumption. The FB channel is used for predistortion feedback of the power amplifier 217C of the HBF architecture. A splitting end of the gating circuit 215C shown in FIG. 16 is coupled to a coupler, and mainly feeds back an output of the power amplifier 217C to the radio frequency channel 12 for digital predistortion training. That the splitting end of the gating circuit 215C is coupled to the power divider 213C is the solution provided in this embodiment. One SPDT is used. Because the predistortion of the power amplifier 217C in the coupling part between the splitting end of the gating circuit 215C and the coupler mainly operates in a downlink slot, and channel sounding in this embodiment is used in an uplink slot, the FB channel can be efficiently reused through the single-pole double-throw switch, thereby reducing hardware investment and reducing hardware costs.

In some possible implementations, the baseband processing device 100 is configured to obtain the channel information at a level of the antenna array element of the radio frequency processing circuit 210 based on the radio frequency reference signal.

For example, the radio frequency reference signal includes channel state information, and in the communication system, the signal state information in the radio frequency reference signal may be obtained to instruct a sending policy of a transmit end. For example, when transmitting information, the transmit end may avoid a propagation path with a poor channel condition or select a propagation path with a good channel condition based on the obtained channel information, to transmit information, thereby improving performance of the communication system.

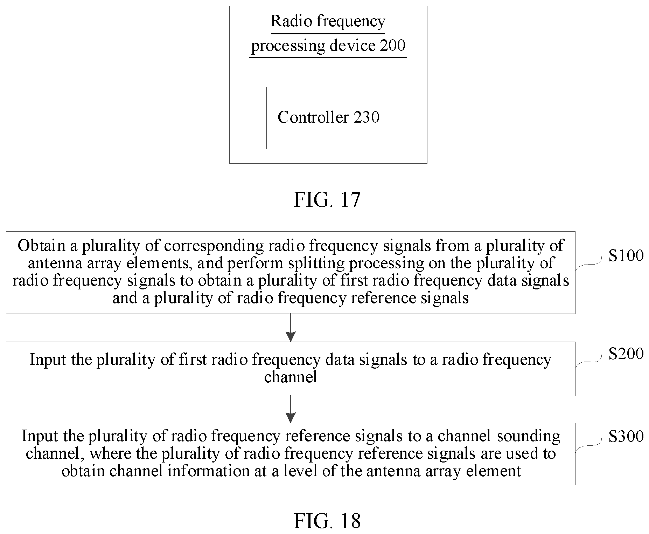

In some possible implementations, as shown in FIG. 17, the radio frequency processing device 200 includes a controller 230, where the controller 230 is configured to obtain the channel information at a level of the antenna array element of the radio frequency processing circuit 210 based on the radio frequency reference signal.

Based on the structures shown in FIG. 11, FIG. 12, FIG. 13, FIG. 14, FIG. 15, and FIG. 16, a signal processing method shown in FIG. 18 including the following steps S100 to S300 may be implemented. The method may be applied to a radio frequency processing circuit, and the radio frequency processing circuit includes a radio frequency channel, a plurality of power dividers, and a channel sounding channel. The following specific steps are included.

S100: The plurality of power dividers obtain a plurality of corresponding radio frequency signals from a plurality of antenna array elements, and perform splitting processing on the plurality of radio frequency signals to obtain a plurality of first radio frequency data signals and a plurality of radio frequency reference signals.

For example, as shown in FIG. 11, the radio frequency processing circuit may include a plurality of radio frequency channels, one radio frequency channel may be coupled to a plurality of power dividers, and each power divider may be coupled to one or more antenna array elements to obtain a corresponding radio frequency signal from the one or more antenna array elements, and perform splitting processing on the radio frequency signal to obtain a first radio frequency data signal and a radio frequency reference signal. The first radio frequency data signal includes information transmitted through a channel. The radio frequency reference signal includes channel attribute information and channel quality information, for example, information such as a phase, an amplitude, and a delay of the channel.

In an example, a power divider obtains a radio frequency signal of a corresponding channel from an antenna array element, and divides the radio frequency signal into two signals to obtain a first radio frequency data signal and a radio frequency reference signal, which are respectively used to be input to the radio frequency channel and the channel sounding channel.

S200: Input the plurality of first radio frequency data signals to the radio frequency channel.

S300: Input the plurality of radio frequency reference signals to the channel sounding channel, where the plurality of radio frequency reference signals are used to obtain channel information at a level of the antenna array element.

In this embodiment of this application, an antenna gain is first increased by mapping one radio frequency channel to a plurality of antenna array elements. Then, the power dividers in the radio frequency processing circuit perform splitting processing on the plurality of radio frequency signals obtained from the plurality of antenna array elements to obtain the plurality of first radio frequency data signals and the plurality of radio frequency reference signals. Subsequently, the plurality of first radio frequency data signals are input to the radio frequency channel to obtain channel transmission information; and the plurality of radio frequency reference signals are input to the channel sounding channel to obtain the channel information at a level of the antenna array element. Different channels are set to obtain different information in the channels, to enhance a channel measurement capability. In a related technology, prolonging a channel measurement period, increasing time overheads, increasing a network system performance loss, and accelerating channel aging that are caused by obtaining the channel transmission information and obtaining the channel information at a level of the antenna array element through only one radio frequency channel are avoided.

In some possible implementations, step S300 may include sub-operations of the following step S310 and step S320.

S310: Input a control signal, where the control signal indicates to select one or more of the plurality of radio frequency reference signals.

For example, the control signal may perform selection based on preset information included in the radio frequency reference signal. The preset information may include energy information, signal quality information, and the like of the radio frequency reference signal. This is not limited herein.

S320: Input the one or more of the plurality of radio frequency reference signals in response to the control signal.

For example, in response to the control signal, the one or more of the plurality of radio frequency reference signals are input to the channel sounding channel to obtain the channel information at a level of the antenna array element. In this embodiment, a plurality of signals in the plurality of radio frequency reference signals may be input at different time.

In some possible implementations, the radio frequency processing circuit further includes a power amplifier; and the channel sounding channel is a power amplifier feedback channel corresponding to the power amplifier. The method further includes: The radio frequency channel transmits a second radio frequency data signal through the antenna array element in a first slot. The inputting the one or more of the plurality of radio frequency reference signals further includes: inputting the one or more of the plurality of radio frequency reference signals to the channel sounding channel in a second slot. The first slot and the second slot are slots that are spaced.

For example, as shown in FIG. 16, the power amplifier feedback channel may be configured to feed back predistortion of the power amplifier. The first slot and the second slot respectively correspond to different operating states. For example, the first slot may correspond to a downlink slot operating state, and the second slot may correspond to an uplink slot operating state. For a specific implementation process, refer to the foregoing descriptions of the corresponding part. Details are not described herein again.

For example, the power amplifier feedback channel may be a power amplifier predistortion feedback channel.

In this embodiment of this application, the power amplifier feedback channel is reused as the channel sounding channel, so that hardware consumption of a radio frequency circuit is reduced, and hardware costs are reduced.

A processor involved in embodiments of this application may be a chip. For example, the processor may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller unit (micro controller unit, MCU), a programmable controller (programmable logic device, PLD), or another integrated chip.

A memory involved in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that, the disclosed system, device, and method may be implemented in other manners. For example, the described device embodiment is merely an example. For example, division into the modules is merely logical function division and may be other division in an actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, that is, may be located in one device, or may be distributed on a plurality of devices. Some or all the modules may be selected according to actual needs to achieve the objectives of the solutions of embodiments.

In addition, functional modules in embodiments of this application may be integrated into one device, or each of the modules may exist alone physically, or two or more modules are integrated into one device.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A radio frequency processing circuit, comprising a radio frequency channel, a plurality of power dividers, and a channel sounding channel, wherein combining ends of the plurality of power dividers are correspondingly coupled to a plurality of antenna array elements; first splitting ends of the plurality of power dividers are coupled to an input end of the radio frequency channel; and second splitting ends of the plurality of power dividers are coupled to an input end of the channel sounding channel;
the plurality of power dividers are configured to: obtain a plurality of corresponding radio frequency signals from the plurality of antenna array elements, and perform splitting processing on the plurality of radio frequency signals to obtain a plurality of first radio frequency data signals and a plurality of radio frequency reference signals;
the radio frequency channel is configured to receive the plurality of first radio frequency data signals as input; and
the channel sounding channel is configured to receive the plurality of radio frequency reference signals as input, wherein the plurality of radio frequency reference signals are used to obtain channel information at a level of the antenna array element.

2. The radio frequency processing circuit according to claim 1, wherein the radio frequency processing circuit further comprises a gating circuit;
the second splitting ends of the plurality of power dividers are coupled to a splitting end of the gating circuit; and
a common end of the gating circuit is coupled to the input end of the channel sounding channel.

3. The radio frequency processing circuit according to claim 2, wherein the gating circuit is a single-pole multi-throw switch.

4. The radio frequency processing circuit according to any one of claims 1 to 3, wherein the radio frequency processing circuit further comprises a plurality of low noise amplifiers; and
input ends of the plurality of low noise amplifiers are correspondingly coupled to the plurality of antenna array elements, and output ends of the plurality of low noise amplifiers are coupled to the combining ends of the plurality of power dividers.

5. The radio frequency processing circuit according to any one of claims 1 to 4, wherein the radio frequency processing circuit further comprises a power amplifier; and
the channel sounding channel is a power amplifier feedback channel corresponding to the power amplifier.

6. A signal processing method, applied to a radio frequency processing circuit, wherein the radio frequency processing circuit comprises a radio frequency channel, a plurality of power dividers, and a channel sounding channel, and the method comprises:
obtaining, by the plurality of power dividers, a plurality of corresponding radio frequency signals from a plurality of antenna array elements, and performing splitting processing on the plurality of radio frequency signals to obtain a plurality of first radio frequency data signals and a plurality of radio frequency reference signals;
inputting the plurality of first radio frequency data signals to the radio frequency channel; and
inputting the plurality of radio frequency reference signals to the channel sounding channel, wherein the plurality of radio frequency reference signals are used to obtain channel information at a level of the antenna array element.

7. The signal processing method according to claim 6, wherein the inputting the plurality of radio frequency reference signals comprises:
inputting a control signal, wherein the control signal indicates to select one or more of the plurality of radio frequency reference signals; and
inputting the one or more of the plurality of radio frequency reference signals in response to the control signal.

8. The signal processing method according to claim 6 or 7, wherein the radio frequency processing circuit further comprises a power amplifier; and the channel sounding channel is a power amplifier feedback channel corresponding to the power amplifier;
the method further comprises: transmitting, by the radio frequency channel, a second radio frequency data signal through the antenna array element in a first slot; and
the inputting the one or more of the plurality of radio frequency reference signals further comprises: inputting the one or more of the plurality of radio frequency reference signals to the channel sounding channel in a second slot, wherein the first slot and the second slot are slots that are spaced.

9. A radio frequency processing device, comprising a circuit board and the radio frequency processing circuit according to any one of claims 1 to 5, wherein the radio frequency processing circuit is disposed on the circuit board.

10. A communication system, comprising: a baseband processing device and the radio frequency processing device according to claim 9, wherein the baseband processing device is coupled to the radio frequency processing device; and the radio frequency processing device is configured to output the plurality of radio frequency reference signals to the baseband processing device, wherein the plurality of radio frequency reference signals are used to obtain the channel information at a level of the antenna array element.

11. The communication system according to claim 10, wherein the baseband processing device is configured to obtain the channel information at a level of the antenna array element of the radio frequency processing circuit based on the radio frequency reference signals.

12. The communication system according to claim 10, wherein the radio frequency processing device comprises a controller, wherein the controller is configured to obtain the channel information at a level of the antenna array element of the radio frequency processing circuit based on the radio frequency reference signals.
